# EUROPEAN PATENT APPLICATION

(11) **EP 3 826 365 A1**
(43) Date of publication of application: **26.05.2021**
(21) Application number: 18929403.6
(22) Date of filing: 08.08.2018
(51) Int. Cl.: H04W 48/08

(54) **SUPERVISION CONTROL METHOD, DEVICE AND SYSTEM OF MOVABLE PLATFORM**

(71) Applicant: SZ DJI Technology Co., Ltd., Shenzhen, Guangdong 518057 (CN)
(72) Inventor: CHEN, Wenyue, Shenzhen, Guangdong 518057 (CN); WANG, Naibo, Shenzhen, Guangdong 518057 (CN)
(74) Representative: Appelt, Christian W.
(86) International application number: PCT/CN2018/099456
(87) International publication number: WO 2020/029134

(57) **Abstract**

The embodiments of the present disclosure provide method, device and system for supervision control of a movable platform. In the method, the movable platform obtains position information of the movable platform; generates a first beacon frame according to the position information of the movable platform, the first beacon frame including the position information of the movable platform; and broadcast-transmits the first beacon frame through a wireless channel. A terminal device receives the first beacon frame broadcast-transmitted by the movable platform through the wireless channel; obtains the position information of the movable platform according to the first beacon frame; and supervises the movable platform according to the position information of the movable platform. Therefore, the terminal device can obtain the position information of the movable platform without a need to know a wireless access password of the movable platform, which not only does not affect the movable platform, but also facilitates supervision of the movable platform by the terminal device without a need for a dedicated movable platform supervising equipment, and with reduced supervision costs.

## Description

### TECHNICAL FIELD

The present disclosure relates to the field of electronic technology and, more particularly, to method, device, and system for supervision control of a movable platform.

### BACKGROUND

With continuous improvement of various functions of unmanned aerial vehicles (UAVs), applications of the UAVs have become more and more extensive, and accordingly, the UAVs have gradually increased in number. The UAVs often have their own Global Positioning System (GPS) or Global Navigation Satellite System (GNSS), which can receive GPS signals, determine their own geographic positions based on the received GPS signals, and perform autonomous positioning flights based on the received GPS signals. Since the UAVs mainly fly in a low-altitude airspace, and to ensure flight safety of the UAVs, the low-altitude airspace needs to be controlled. Generally, the UAVs broadcast position information outwards, and customized ground receiver equipment can be used to detect, receive, and decode to obtain this information. Positions of the UAVs flying in the low-altitude airspace can be obtained for low-altitude airspace control.

In addition, because Wireless-Fidelity (Wi-Fi) technology is mature enough with low cost and easy for transplantation, the Wi-Fi technology has become a first choice for UAV wireless communication solutions. Most of the UAVs currently use the Wi-Fi technology, and the Wi-Fi technology can provide an uplink and downlink channel for image transmission and remote control commands between ground control terminals and the UAVs. However, the UAVs that use the Wi-Fi technology are generally equipped with Wi-Fi Protected Access-Pre-Shared Key (WPA-PSK)/WPA2-PSK encryption. The UAVs cannot be accessed without knowing passwords, and the position information of the UAVs cannot be obtained, which is not conducive to the low-altitude airspace control.

### SUMMARY

Embodiments of the present disclosure provide a supervision control method, device, and system of a movable platform, which are used for a terminal device to obtain position information of the movable platform, and supervise the movable platform, even without knowing an access password of the movable platform.

In a first aspect, the embodiments of the present disclosure provide a supervision control method for a movable platform, applied to the movable platform, and the method includes:

obtaining position information of the movable platform;

generating a first beacon frame according to the position information of the movable platform, that the first beacon frame includes the position information of the movable platform; and

broadcast-transmitting the first beacon frame through a wireless channel, so that a terminal device receiving the first beacon frame supervises the movable platform according to the position information in the first beacon frame.

In a second aspect, the embodiments of the present disclosure provide a supervision control method for a movable platform, applied to a terminal device, and the method includes:

receiving a first beacon frame broadcast-transmitted by the movable platform through a wireless channel, that the first beacon frame includes position information of the movable platform, and the first beacon frame is transmitted by the movable platform when a transmitting period of the first beacon frame arrives;

obtaining the position information of the movable platform according to the first beacon frame; and

supervising the movable platform according to the position information of the movable platform.

In a third aspect, the embodiments of the present disclosure provide a movable platform, including:

a first processor, configured to obtain position information of the movable platform, and generate a first beacon frame according to the position information of the movable platform, that the first beacon frame includes the position information of the movable platform; and

a first wireless communication device, configured to broadcast-transmit the first beacon frame through a wireless channel, so that a terminal device receiving the first beacon frame supervises the movable platform according to the position information in the first beacon frame.

In a fourth aspect, the embodiments of the present disclosure provide a terminal device, including:

a second wireless communication device, configured to receive, through a wireless channel, a first beacon frame broadcast-transmitted by a movable platform, that the first beacon frame includes position information of the movable platform, and the first beacon frame is transmitted by the movable platform when a transmitting period of the first beacon frame arrives; and

a second processor, configured to obtain the position information of the movable platform according to the first beacon frame; and supervise the movable platform according to the position information of the movable platform.

In a fifth aspect, the embodiments of the present disclosure provide a supervision control system for a movable platform, including: the movable platform and a terminal device.

The movable platform is configured to obtain position information of the movable platform, generate a first beacon platform according to the position information of the movable platform, that the first beacon frame includes the position information of the movable platform, and broadcast-transmit the first beacon frame through a wireless channel.

The terminal device is configured to receive the first beacon frame broadcast-transmitted by the movable platform through the wireless channel, obtain the position information of the movable platform according to the first beacon frame, and supervise the movable platform according to the position information of the movable platform.

In a sixth aspect, the embodiments of the present disclosure provide a computer-readable storage medium. The computer-readable storage medium stores a computer program. The computer program includes at least one piece of code. The at least one piece of code can be executed by a computer to control the computer to execute the supervision control method of the movable platform described in the first aspect or the second aspect.

In a seventh aspect, the embodiments of the present disclosure provide a computer program. When the computer program is executed by a computer, it is configured to implement the supervision control method of the movable platform described in the first aspect or the second aspect.

According to the method, device, and system for control of the movable platform provided by the embodiments of the present disclosure, since the movable platform includes the position information of the movable platform in the first beacon frame, and the first beacon frame is a plaintext frame, as long as a terminal device can detect a wireless broadcast signal of the movable platform, the terminal device can receive the first beacon frame. The first beacon frame is a plaintext frame, and the terminal device can obtain the position information of the movable platform from the first beacon frame. Therefore, the terminal device does not need to connect to the UAV to establish a one-to-one communication link, and can obtain the position information of the UAV, which not only does not affect the UAV, but also facilitates the supervision (for example, low-altitude airspace control of the UAV) of the UAV by the terminal device, without a need for a dedicated UAV supervision device, and with reduced supervision costs.

### BRIEF DESCRIPTION OF THE DRAWINGS

To more clearly illustrate technical solutions in the embodiments of the present disclosure or existing technologies, the accompanying drawings needed to be used in the embodiments or existing technologies will be briefly described below. It is obvious that the accompanying drawings in the following description are only some embodiments of the present disclosure. For those having ordinary skills in the art, other drawings can be obtained according to these accompanying drawings without inventive efforts.
FIG. 1 is a schematic architecture diagram of a supervision control system for a movable platform according to the embodiments of the present disclosure;
FIG. 2 is a flowchart of a supervision control method for a movable platform according to the embodiments of the present disclosure;
FIG. 3 is a schematic diagram of an SSID field in a first beacon frame according to the embodiments of the present disclosure;
FIG. 4 is a schematic structural diagram of a movable platform according to the embodiments of the present disclosure;
FIG. 5 is a schematic structural diagram of a terminal device according to the embodiments of the present disclosure; and
FIG. 6 is a schematic structural diagram of a supervision control system for a movable platform according to the embodiments of the present disclosure.

### DETAILED DESCRIPTION OF THE EMBODIMENTS

To more clearly illustrate the objectives, the technical solutions, and the advantages in the embodiments of the present disclosure, the technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. On the basis of the embodiments of the present disclosure, all other embodiments obtained by those having ordinary skills in the art without inventive efforts should fall within the protection scope of the present disclosure.

The embodiments of the present disclosure provide a method, device and system for supervision control of a movable platform. The movable platform may be, for example, an unmanned aerial vehicle (UAV), an unmanned ship, an unmanned car, a robot, etc. In which, the UAV may be, for example, a rotorcraft, such as, a multi-rotor aircraft propelled by multiple propulsion devices through air, and the embodiments of the present disclosure are not limited thereto.

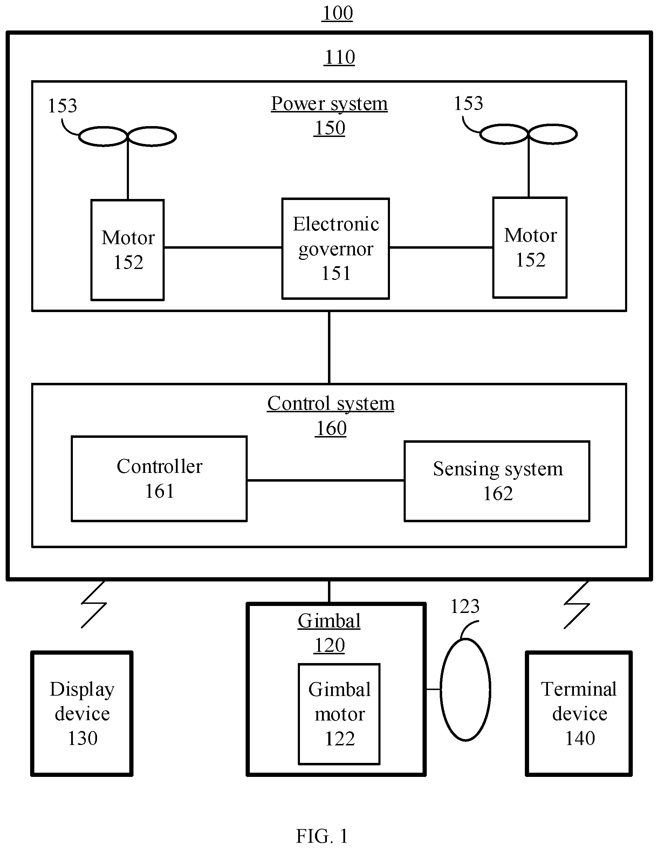

FIG. 1 is a schematic architecture diagram of a supervision control system for a movable platform according to the embodiments of the present disclosure. In this embodiment, the movable platform is a UAV as an example for description.

A supervision control system 100 of the movable platform may include a UAV 110, a display device 130, and a terminal device 140. In this embodiment, the UAV 110 is an unmanned aerial vehicle as an example, which may include a power system 150, a control system 160, a frame, and a gimbal 120 mounted on the frame. The UAV 110 can wirelessly communicate with the terminal device 140 and the display device 130. In other embodiments, the UAV may also be an unmanned car or an unmanned ship.

The frame can include a fuselage and a tripod (also called a landing gear). The fuselage may include a center frame and one or more arms connected to the center frame, and the one or more arms extend radially from the center frame. The tripod is connected with the fuselage, and is used for supporting the UAV 110 during landing. The control system 160 is arranged in the fuselage.

The power system 150 may include one or more electronic governors (EGs) 151, one or more propellers 153, and one or more motors 152 corresponding to the one or more propellers 153. In which, the motors 152 are connected between the EGs 151 and the propellers 153, and the motors 152 and the propellers 153 are arranged on the arms of the UAV 110. The EGs 151 are used to receive driving signals generated by the control system 160, and provide driving currents to the motors 152 according to the driving signals to control rotation speeds of the motors 152. It should be noted that one EG 151 can correspond to multiple motors, or multiple EGs 151 can correspond to one motor 152 respectively. The motors 152 are used to drive the propellers to rotate, thereby providing power for a flight of the UAV 11 0, and the power enables the UAV 110 to realize movement of one or more degrees of freedom. In some embodiments, the UAV 110 may rotate about one or more rotation axes. For example, the aforementioned rotation axes may include a roll axis (Roll), a yaw axis (Yaw), and a pitch axis (pitch). It should be understood that the motors 152 may be DC motors or AC motors. In addition, the motors 152 may be brushless motors or brushed motors.

The control system 160 may include a controller 161 and a sensing system 162. The sensing system 162 is used to measure posture information of the UAV, that is, position information and state information of the UAV 110 in space, such as three-dimensional positions, three-dimensional angles, three-dimensional velocities, three-dimensional accelerations, three-dimensional angular velocities, etc. The sensing system 162 may include, for example, at least one of sensors such as a gyroscope, an ultrasonic sensor, an electronic compass, an inertial measurement unit (IMU), a vision sensor, a global navigation satellite system, or a barometer, etc. For example, the global navigation satellite system may be a GPS. The controller 161 is used to control a flight or operation of the UAV 110, for example, it can control the flight or operation of the UAV 110 according to the posture information measured by the sensing system 162. It should be understood that the controller 161 can control the UAV 110 according to preprogrammed program instructions.

The gimbal 120 may include a gimbal motor 122. The gimbal is used to carry a photographing device 123. The controller 161 can control movements of the gimbal 120 by controlling rotations of the gimbal motor 122. Optionally, as another embodiment, the gimbal 120 may further include a gimbal controller for controlling the movements of the gimbal 120 by controlling the gimbal motor 122. It should be understood that the gimbal 120 may be independent of the UAV 110 or may be a part of the UAV 110. It should be understood that the gimbal motor 122 may be a DC motor or an AC motor. In addition, the gimbal motor 122 may be a brushless motor or a brushed motor. It should also be understood that the gimbal may be located on a top of the UAV or at a bottom of the UAV.

The photographing device 123 may be, for example, a device for capturing images, such as a camera or a video camera, etc., and the photographing device 123 may communicate with a flight controller and photograph under control of the flight controller. The photographing device 123 of this embodiment at least includes a photosensitive element, and the photosensitive element is, for example, a Complementary Metal Oxide Semiconductor (CMOS) sensor or a Charge-coupled Device (CCD) sensor. It can be understood that the photographing device 123 can also be directly fixed to the UAV 110, so the gimbal 120 can be omitted.

The display device 130 is located at a ground terminal, can communicate with the UAV 110 in a wireless manner, and can be used to display the posture information of the UAV 110. In addition, the images taken by the photographing device may also be displayed on the display device 130.

The terminal device 140 may be located at a ground terminal of the supervision control system 100 of the movable platform, can communicate with the UAV 110 in a wireless manner, and is used for supervising and processing the UAV 110.

It should be understood that above naming of components of the UAV system is only for identification purposes, and should not be understood as a limitation to the embodiments of the present disclosure.

FIG. 1 takes one UAV and one terminal device as an example. In some embodiments, the supervision control system 100 of the movable platform may include multiple UAVs 110, and the terminal device 140 can supervise the multiple UAVs 110. In some embodiments, the supervision control system 100 of the movable platform may include multiple terminal devices 140, and a same UAV may be supervised by the multiple terminal devices 140.

A terminal device: in the embodiments of the present disclosure, it refers to a wireless terminal device, which refers to a device with a wireless transceiver function, which can be deployed on land, including indoor or outdoor, handheld or vehicle-mounted; or on water (such as ships etc.); or also in the air (such as on airplanes, balloons, satellites, etc.). The terminal device may be a remote control device, a mobile phone, a tablet computer (Pad), a computer with the wireless transceiver function, a wearable device, a virtual reality (VR) terminal, an augmented reality (AR) terminal, a wireless terminal in industrial control, a wireless terminal in self driving, a wireless terminal in remote medical, a wireless terminal in smart grids, a wireless terminal in transportation safety, a wireless terminal in smart cities, a wireless terminal in smart homes, etc., which is not limited here.

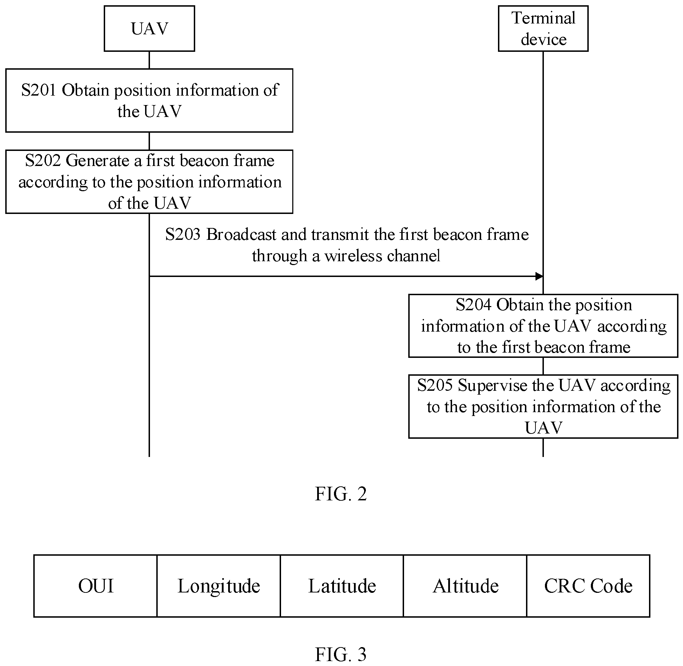

FIG. 2 is a flowchart of a supervision control method for a movable platform according to the embodiments of the present disclosure. As shown in FIG. 2, this embodiment takes a movable platform as a UAV as an example. The method of this embodiment may include:

S201: the UAV obtains position information of the UAV.

In this embodiment, the UAV can obtain its own position information. Optionally, the UAV can obtain the position information of the UAV when a transmitting period of a first beacon frame arrives. The position information of the UAV can indicate a position of the UAV. The transmitting period of the first beacon frame is, for example, 3 seconds (3 s), and the UAV obtains the position information of the UAV every 3 seconds. In which, the first beacon frame belongs to a beacon frame. It can be understood that the transmitting period of the first beacon frame can be set according to requirements, and is not limited to this embodiment.

S202: the UAV generates the first beacon frame according to the position information of the UAV.

In this embodiment, after the UAV obtains its own position information, it generates the first beacon frame, and the generated first beacon frame includes the position information of the UAV. For example, the position information of the UAV is added to a field of the first beacon frame, so that the first beacon frame carries the position information of the UAV.

S203: the UAV broadcast-transmits the first beacon frame through a wireless channel. Correspondingly, a terminal device receives the first beacon frame through the wireless channel.

In this embodiment, after the UAV generates the first beacon frame, it broadcast-transmits the first beacon frame through the wireless channel. Correspondingly, all terminal devices that can receive the broadcast signal of the UAV can receive the first beacon frame broadcast-transmitted by the UAV. It should be noted that there may be at least one terminal device that can receive the first beacon frame. FIG. 2 takes one of the terminal devices as an example for illustration, and other terminal devices have similar processing processes.

Optionally, taking the transmitting period of the first beacon frame as an example, the UAV obtains the position information of the UAV every 3 s, and then broadcast-transmits the first beacon frame including the position information through the wireless channel. If the position information of the UAV changes, correspondingly, a content in the first beacon frame transmitted in each period will also be different.

S204: the terminal device obtains the position information of the UAV according to the first beacon frame.

In this embodiment, after the terminal device receives the first beacon frame, since the first beacon frame is a plaintext frame and is a frame that has not been encrypted, the terminal device can obtain the position information of the UAV in the first beacon frame according to the first beacon frame.

S205: the terminal device supervises the UAV according to the position information of the UAV.

In this embodiment, the terminal device can determine that there is the UAV at a position indicated by the position information. The terminal device can supervise the UAV according to the position information. In which, for how to supervise the UAV, related descriptions in existing technologies can be referred to, which will not be repeated here.

In summary, since the UAV includes the position information of the UAV in the first beacon frame, and the first beacon frame is a plaintext frame, any terminal device that detects the wireless broadcast signal of the UAV can be used to receive the first beacon frame. Since the first beacon frame is a plaintext frame, the terminal device can obtain the position information of the UAV from the first beacon frame. Therefore, the terminal device does not need to connect to the UAV to establish a one-to-one communication link, and can obtain the position information of the UAV, which not only does not affect the UAV, but also facilitates the terminal device to supervise the UAV (such as low-altitude airspace control of the UAV), without a need for a dedicated UAV supervision equipment, and reduces supervision costs.

In some embodiments, after the terminal device executes the above S202, if the terminal device wants to continue to obtain the position information of the UAV, the terminal device can continue to wait for receiving other first beacon frames through the same wireless channel that receives the first beacon frame. Since the UAV transmits the first beacon frame periodically, the terminal device can receive the first beacon frame again when the transmitting period of the first beacon frame arrives. If the position of the UAV changes, the position information of the UAV in the first beacon frame received by the terminal device at different times will also be different. Then the terminal device can supervise the UAV according to the position information of the UAV in the first beacon frame received multiple times, or the terminal device can supervise the UAV according to the position information of the UAV in the latest received first beacon frame. Therefore, if a beacon frame received by the terminal device includes the position information of the UAV, the terminal device will wait to continue receiving beacon frames on the same wireless channel in order to continuously supervise the UAV.

In some embodiments, the UAV also receives positioning signals through a positioning device of the UAV. The positioning device can receive the positioning signals in real time, and the positioning device is, for example, a GPS, a Beidou, a Galileo satellite navigation system, etc. When the transmitting period of the first beacon frame arrives (for example, every 3 s), the UAV obtains a positioning signal currently received by the positioning device, and determines the position information of the UAV according to the currently received positioning signal. Optionally, the position information of the UAV may include at least one of the following: longitude, latitude, or altitude.

In some embodiments, the aforementioned wireless channel is a Wi-Fi channel or a Bluetooth channel, but is not limited to this in this embodiment, and may also be other types of wireless channels.

If a Wi-Fi module is installed in the UAV, the UAV can broadcast Wi-Fi signals through the Wi-Fi module, and the Wi-Fi signals can be transmitted through the Wi-Fi channel, so the UAV can use the Wi-Fi Channel, to broadcast-transmit the first beacon frame, and the first beacon frame can be considered as a Wi-Fi signal. Correspondingly, if a Wi-Fi module is also installed in the terminal device, the terminal device can receive the Wi-Fi signal through the Wi-Fi module, so the terminal device can receive the first beacon frame broadcast-transmitted by the UAV through the Wi-Fi channel.

If a Bluetooth module is installed in the UAV, the UAV can broadcast Bluetooth signals through the Bluetooth module, and the Bluetooth signals can be transmitted through the Bluetooth channel. Therefore, a possible implementation of the S203 above is that: the UAV uses the Bluetooth channel, to broadcast-transmit the first beacon frame, and the first beacon frame can be considered as a Bluetooth signal. Correspondingly, if a Bluetooth module is also installed in the terminal device, the terminal device can receive the Bluetooth signal through the Bluetooth module, so the terminal device can receive the first beacon frame broadcast-transmitted by the UAV through the Bluetooth channel.

In some embodiments, the above-mentioned position information of the UAV is carried in a service set identifier (SSID) field in the first beacon frame. A possible implementation of the above S202 is that the UAV adds the position information of the UAV to the SSID field in a beacon frame to generate the first beacon frame. Correspondingly, a possible implementation of the S204 above is that: the terminal device parses the SSID field in the received first beacon frame, because the SSID field in the first beacon frame carries the position information of the UAV, so the terminal device can obtain the position information of the UAV.

In some embodiments, the SSID field in the first beacon frame of this embodiment may include at least one of the position information of the UAV, identity information of a user, or manufacturer identification information of the UAV. The manufacturer identification information can be used to identify a manufacturer of the UAV and/or a model of the UAV. A possible implementation of the S202 above is that the UAV adds the position information of the UAV and the manufacturer identification information to the SSID field in a beacon frame to generate the first beacon frame. Correspondingly, a possible implementation of the S204 above is: the terminal device parses the SSID field in the received first beacon frame, because the SSID field in the first beacon frame carries the position information of the UAV and the manufacturer identification information, so the terminal device can obtain the position information and the manufacturer identification information of the UAV.

FIG. 3 is a schematic diagram of an SSID field in a first beacon frame according to the embodiments of the present disclosure. As shown in FIG. 3, an SSID field includes the manufacturer identification information of the UAV and the position information of the UAV, that FIG. 3 takes the manufacturer identification information as an Organizationally Unique Identifier (OUI) of the manufacturer, and the position information of the UAV including: longitude, latitude, and altitude, as an example. Optionally, the SSID field of this embodiment also includes a cyclic redundancy check (CRC) code. The CRC code is, for example, a CRC-16 code. The terminal device can perform CRC verification on the manufacturer identification information of the UAV and the position information of the UAV according to the CRC code, to ensure correctness and completeness of the manufacturer identification information and the position information. It should be noted that an internal structure of the SSID field may not be limited to that shown in FIG. 3. In which, the SSID field can be 32 bytes long, for example.

On the basis of the foregoing embodiments, the UAV in this embodiment may also periodically broadcast a second beacon frame through the above-mentioned wireless channel. A transmitting period of the second beacon frame is different from the transmitting period of the first beacon frame. Therefore, the UAV not only broadcast-transmits the first beacon frame through the wireless channel when the transmitting period of the first beacon frame arrives, but also broadcast-transmits the second beacon frame through the wireless channel when the transmitting period of the second beacon frame arrives, that the first beacon frame includes the position information of the UAV, and the second beacon frame includes identification information of the UAV. The identification information of the UAV is used to distinguish the UAV from other UAVs. The identification information of the UAV is, for example, a name set by the user for the UAV. If the user does not change the name of the UAV, the identification information of the UAV in the second beacon frame periodically transmitted by the UAV is the same information.

For example, the transmitting period of the second beacon frame is 100ms, and the transmitting period of the first beacon frame is 3 s. The UAV obtains the position information of the UAV every 3 s, and transmits the first beacon frame, and the first beacon frame includes the position information of the UAV. And the UAV transmits the second beacon frame every 100ms, and the second beacon frame includes the identification information of the UAV.

Optionally, the identification information of the UAV is carried in the SSID field in the second beacon frame. In which, if the SSID field in a beacon frame broadcast-transmitted by the UAV includes the position information of the UAV, the beacon frame is called the first beacon frame; and if the SSID field includes the identification information of the UAV, the beacon frame is called the second beacon frame. Therefore, the terminal device receives the beacon frame broadcast-transmitted by the UAV through the same wireless channel. If the beacon frame is the first beacon frame, the terminal device parses the SSID field in the beacon frame to obtain the position information of the UAV, and if the beacon frame is the second beacon frame, the terminal device parses the SSID field in the beacon frame to obtain the identification information of the UAV.

In this embodiment, if the terminal device receives the first beacon frame broadcast-transmitted by the UAV through the same wireless channel, and also receives the second beacon frame broadcast-transmitted by the UAV, because the second beacon frame includes the identification information of the UAV, the terminal device can supervise the UAV identified by the identification information according to the position information in the received first beacon frame, so that the terminal device can distinguish each UAV under supervision.

It should be noted that, for other fields in the first beacon frame except of the SSID field, descriptions in a beacon frame in an 802.11 protocol can be referred to, which will not be repeated here. The second beacon frame may also refer to the descriptions in the beacon frame in the 802.11 protocol, which will not be repeated here.

In summary, the terminal device can detect the position information of the UAV without knowing a wireless connection password of the UAV, and it can also detect the identity of the UAV, which does not affect a normal flight of the UAV. Use of the terminal device (such as a smart phone) as a supervising tool for the UAV has greatly reduced the supervision costs.

The embodiments of the present disclosure also provide a computer storage medium, that the computer storage medium stores program instructions, and execution of the program instructions may include part or all of the steps of the supervision control method of the movable platform in the foregoing embodiments.

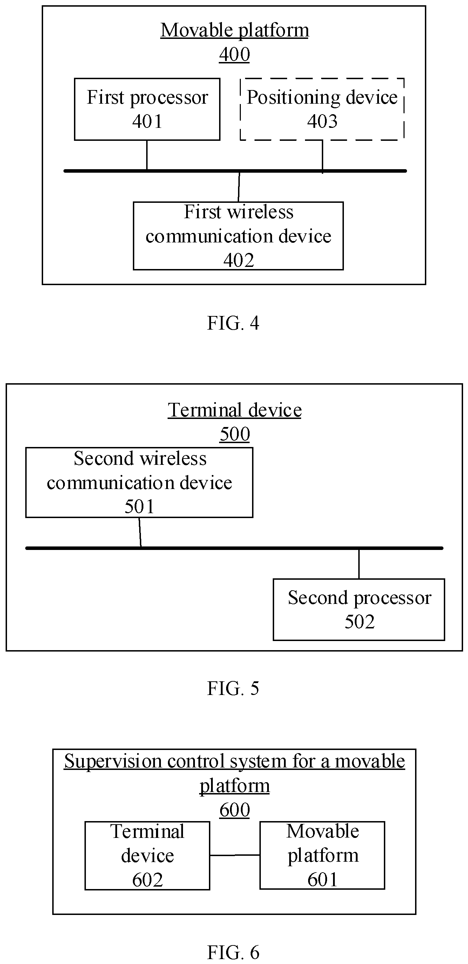

FIG. 4 is a schematic structural diagram of a movable platform according to the embodiments of the present disclosure. As shown in FIG. 4, a movable platform 400 of this embodiment may include: a first processor 401 and a first wireless communication device 402. The first processor 401 and the first wireless communication device 402 may be connected in communication via a bus. The above-mentioned first processor 401 may be a central processing unit (CPU). The first processor 401 may also be other general-purpose processors, digital signal processors (DSPs), application-specific integrated circuits (ASIC), a field-programmable gate array (FPGA) or other programmable logic devices, discrete gates or transistor logic devices, discrete hardware components, etc. The general-purpose processors may be a microprocessor or the processors may also be any conventional processor, etc. Optionally, the movable platform 400 of this embodiment may further include a positioning device 403, and the positioning device 403 may be connected to the first processor 401 in communication through the bus.

In which, the first processor 401 is configured to obtain position information of the movable platform 400; and generate a first beacon frame according to the position information of the movable platform 400, that the first beacon frame includes the position information of the movable platform 400.

The first wireless communication device 402 is configured to broadcast-transmit the first beacon frame through a wireless channel, so that a terminal device receiving the first beacon frame supervises the movable platform 400 according to the position information in the first beacon frame.

Optionally, the first processor 401 is specifically configured to obtain the position information of the movable platform 400 when a transmitting period of the first beacon frame arrives.

Optionally, the first wireless communication device 402 includes a Wi-Fi module or a Bluetooth module.

If the first wireless communication device 402 includes the Wi-Fi module, the Wi-Fi module is configured to broadcast-transmit the first beacon frame through a Wi-Fi channel.

If the first wireless communication device 402 includes the Bluetooth module, the Bluetooth module is configured to broadcast-transmit the first beacon frame through a Bluetooth channel.

Optionally, the position information of the movable platform 400 is carried in an SSID field in the first beacon frame.

Optionally, the SSID field in the first beacon frame also includes manufacturer identification information of the movable platform 400.

Optionally, the position information includes at least one of the following: longitude, latitude, or altitude.

Optionally, the first wireless communication device 402 is further configured to broadcast-transmit a second beacon frame through the wireless channel when a transmitting period of the second beacon frame arrives. Identification information of the movable platform 400 is included in the second beacon frame. In which, the transmitting period of the first beacon frame is different from the transmitting period of the second beacon frame.

Optionally, the identification information of the movable platform 400 is carried in the SSID field in the second beacon frame.

Optionally, the positioning device 403 is configured to receive positioning signals.

The first processor 401 is specifically configured to determine the position information of the movable platform 400 according to the positioning signals received by the positioning device 403.

Optionally, the movable platform 400 of this embodiment may further include a first memory (not shown in FIG. 4), and the first memory is configured to store program codes. When the program codes are executed, the movable platform 400 may implement the technical solutions of the above-mentioned UAV.

The movable platform of this embodiment can be used to implement the technical solutions of the UAV in the foregoing method embodiments of the present disclosure. Implementation principles and technical effects are similar, and will not be repeated here.

FIG. 5 is a schematic structural diagram of a terminal device according to the embodiments of the present disclosure. As shown in FIG. 5, a terminal device 500 of this embodiment may include: a second wireless communication device 501 and a second processor 502. The second wireless communication device 501 and the second processor 502 may be connected in communication via a bus. The aforementioned second processor 502 may be a CPU. The second processor 502 may also be other general-purpose processors, DSPs, ASICs, FPGAs or other programmable logic devices, discrete gates or transistor logic devices, discrete hardware components, etc. The general-purpose processors may be a microprocessor or the processors may also be any conventional processor, etc.

In which, the second wireless communication device 501 is configured to receive a first beacon frame broadcast-transmitted by a movable platform through a wireless channel, that the first beacon frame includes position information of the movable platform, and the first beacon frame is transmitted by the movable platform when a transmitting period of the first beacon frame arrives.

The second processor 502 is configured to obtain the position information of the movable platform according to the first beacon frame; and supervise the movable platform according to the position information of the movable platform.

Optionally, the second wireless communication device 501 is further configured to continue to receive the first beacon frame periodically broadcast-transmitted by the movable platform through the wireless channel.

The second processor 502 is further configured to supervise the movable platform according to the position information of the movable platform in the first beacon frame received continuously.

Optionally, the second wireless communication device 501 includes: a Wi-Fi module or a Bluetooth module.

If the second wireless communication device 501 includes the Wi-Fi module, the Wi-Fi module is configured to receive the first beacon frame broadcast-transmitted by the movable platform through a Wi-Fi channel.

If the second wireless communication device 501 includes the Bluetooth module, the Bluetooth module is configured to receive the first beacon frame broadcast-transmitted by the movable platform through a Bluetooth channel.

Optionally, the position information of the movable platform is carried in an SSID field in the first beacon frame. The second processor 502 is specifically configured to parse the SSID field in the first beacon frame to obtain the position information of the movable platform.

Optionally, the SSID field in the first beacon frame also includes manufacturer identification information of the movable platform.

Optionally, the position information includes at least one of the following: longitude, latitude, or altitude.

Optionally, the second wireless communication device 501 is further configured to receive, through the wireless channel, a second beacon frame broadcast-transmitted by the movable platform, that the second beacon frame is transmitted by the movable platform when a transmitting period of the second beacon frame arrives, and the second beacon frame includes identification information of the movable platform. The second processor 502 is further configured to obtain the identification information of the movable platform according to the second beacon frame.

Correspondingly, when the second processor 502 supervises the movable platform, it is specifically configured to supervise the movable platform identified by the identification information.

In which, the transmitting period of the first beacon frame is different from the transmitting period of the second beacon frame.

Optionally, the identification information of the movable platform is carried in the SSID field in the second beacon frame.

The terminal device of this embodiment can be used to implement the technical solutions of the terminal device in the foregoing method embodiments of the present disclosure. Implementation principles and technical effects are similar, and will not be repeated here.

FIG. 6 is a schematic structural diagram of a supervision control system for a movable platform according to the embodiments of the present disclosure. As shown in FIG. 6, a supervision control system 600 for a movable platform in this embodiment may include: a movable platform 601 and a terminal device 602. It should be noted that FIG. 6 shows one movable platform and one terminal device, but this embodiment is not limited to this. This embodiment may include multiple movable platforms and multiple terminal devices, or, multiple movable platforms and one terminal device, or one movable platform and multiple terminal devices.

In which, the movable platform 601 is configured to obtain position information of the movable platform 601; according to the position information of the movable platform 601, generate a first beacon frame, that the first beacon frame includes the position information of the movable platform 601; and broadcast-transmit the first beacon frame through a wireless channel.

The terminal device 602 is configured to receive the first beacon frame broadcast-transmitted by the movable platform 601 through the wireless channel; obtain the position information of the movable platform 601 according to the first beacon frame; and supervise the movable platform 601 according to the position information of the movable platform 601.

Optionally, when the movable platform 601 obtains the position information of the movable platform 601, it is specifically configured to obtain the position information of the movable platform 601 when a transmitting period of the first beacon frame arrives.

Optionally, the movable platform 601 is specifically configured to: broadcast-transmit the first beacon frame through a Wi-Fi channel; or, broadcast-transmit the first beacon frame through a Bluetooth channel.

Optionally, the position information of the movable platform 601 is carried in an SSID field in the first beacon frame.

The terminal device 602 is specifically configured to parse the SSID field in the first beacon frame to obtain the position information of the movable platform 601.

Optionally, the SSID field in the first beacon frame also includes manufacturer identification information of the movable platform 601.

Optionally, the position information includes at least one of the following: longitude, latitude, or altitude.

Optionally, the terminal device 602 is further configured to continue to receive the first beacon frame periodically broadcast-transmitted by the movable platform 601 through the wireless channel; and supervises the movable platform 601 according to the position information of the movable platform 601 in the continuously received first beacon frame.

Optionally, the movable platform 601 is further configured to broadcast-transmit a second beacon frame through the wireless channel when a transmitting period of the second beacon frame arrives, that the second beacon frame includes identification information of the movable platform 601; where the transmitting period of the first beacon frame is different from the transmitting period of the second beacon frame.

The terminal device 602 is also configured to receive the second beacon frame broadcast-transmitted by the movable platform 601 through the wireless channel. Accordingly, when the terminal device 602 is supervising the movable platform 601, it is specifically configured to supervise the movable platform 601 identified by the identification information.

Optionally, the identification information of the movable platform 601 is carried in the SSID field in the second beacon frame.

Optionally, the movable platform 601 is further configured to receive positioning signals through a positioning device of the movable platform 601. When the movable platform 601 obtains the position information of the movable platform 601, it is specifically configured to determine the position information of the movable platform 601 according to the positioning signals.

In summary, the terminal device can detect the position information of the movable platform without knowing a wireless connection password of the movable platform, so as to realize the supervision of the movable platform, and the terminal device can also detect the identity of a UAV. The above scheme does not affect normal operations of the movable platform, and the use of the terminal device (such as a smart phone) as a supervising tool for the movable platform greatly reduces the supervision costs.

In which, the movable platform 601 may adopt a structure of the embodiments shown in FIG. 4, which correspondingly can execute the technical solutions of the UAV in the above-mentioned method embodiments, its implementation principles and technical effects are similar, and will not be repeated here. The terminal device 602 may adopt a structure of the embodiments shown in FIG. 5, which can correspondingly execute the technical solutions of the terminal device in the foregoing method embodiments, the implementation principles and technical effects are similar, and will not be repeated here.

A person of ordinary skill in the art can understand that all or part of the steps in the above method embodiments can be implemented by relevant hardware instructed by a program. The foregoing program can be stored in a computer readable storage medium. When the program is executed, the steps of the foregoing method embodiments are executed. The foregoing storage medium includes: a medium which can store program codes, such as a read-only memory (ROM), a random access memory (RAM), magnetic disks or optical disks, etc.

Finally, it should be noted that the above embodiments are only used to illustrate the technical solutions of the present disclosure, but not to limit it. Although the present disclosure has been described in detail with reference to the foregoing embodiments, those of ordinary skill in the art should understand: it is still possible to modify the technical solutions described in the foregoing embodiments, or equivalently replace some or all of the technical features; and these modifications or replacements do not make essence of the corresponding technical solutions deviate from the scope of the technical solutions of the embodiments of the present disclosure.

## Claims

1. A supervision control method of a movable platform, applied to the movable platform, comprising:
obtaining position information of the movable platform;
generating a first beacon frame according to the position information of the movable platform, wherein the first beacon frame includes the position information of the movable platform; and
through a wireless channel, broadcast-transmitting the first beacon frame, so that a terminal device receiving the first beacon frame supervises the movable platform according to the position information in the first beacon frame.

2. The method according to claim 1, wherein obtaining the position information of the movable platform includes:
when a transmitting period of the first beacon frame arrives, obtaining the position information of the movable platform.

3. The method according to claim 1 or 2, wherein, through the wireless channel, broadcast-transmitting the first beacon frame includes:
through a Wi-Fi channel, broadcast-transmitting the first beacon frame; or,
through a Bluetooth channel, broadcast-transmitting the first beacon frame.

4. The method according to any one of claims 1 to 3, wherein the position information of the movable platform is carried in a service set identifier (SSID) field in the first beacon frame.

5. The method according to claim 4, wherein the SSID field in the first beacon frame further includes manufacturer identification information of the movable platform.

6. The method according to any one of claims 1-5, wherein the position information includes at least one of: longitude, latitude, or altitude.

7. The method according to any one of claims 1-6, further comprising:
when a transmitting period of a second beacon frame arrives, broadcast-transmitting the second beacon frame through the wireless channel, wherein the second beacon frame includes identification information of the movable platform, wherein:
the transmitting period of the first beacon frame is different from the transmitting period of the second beacon frame.

8. The method according to claim 7, wherein the identification information of the movable platform is carried in an SSID field in the second beacon frame.

9. The method according to any one of claims 1-8, wherein the method further includes:
receiving a positioning signal through a positioning device of the movable platform, wherein:
obtaining the position information of the movable platform includes: obtaining the position information of the movable platform according to the positioning signal.

10. A supervision control method for a movable platform, applied to a terminal device, comprising:
through a wireless channel, receiving a first beacon frame broadcast-transmitted by the movable platform, wherein the first beacon frame includes position information of the movable platform, and the first beacon frame is transmitted by the movable platform when a transmitting period of the first beacon frame arrives;
obtaining the position information of the movable platform according to the first beacon frame; and
according to the position information of the movable platform, supervising the movable platform.

11. The method according to claim 10, wherein after obtaining the position information of the movable platform according to the first beacon frame, the method further includes:
through the wireless channel, continuing to receive the first beacon frame periodically broadcast-transmitted by the movable platform; and
supervising the movable platform according to the position information of the movable platform in the first beacon frame received continuously.

12. The method according to claim 10 or 11, wherein through the wireless channel, receiving the first beacon frame broadcast-transmitted by the movable platform includes:
through a Wi-Fi channel, receiving the first beacon frame broadcast-transmitted by the movable platform; or,
through a Bluetooth channel, receiving the first beacon frame broadcast-transmitted by the movable platform.

13. The method according to any one of claims 10-12, wherein the position information of the movable platform is carried in an SSID field in the first beacon frame, wherein:
obtaining the position information of the movable platform according to the first beacon frame includes:
parsing the SSID field in the first beacon frame to obtain the position information of the movable platform.

14. The method according to claim 13, wherein the SSID field in the first beacon frame further includes manufacturer identification information of the movable platform.

15. The method according to any one of claims 10-14, wherein the position information includes at least one of: longitude, latitude, or altitude.

16. The method according to any one of claims 10-15, further comprising:
through the wireless channel, receiving a second beacon frame broadcast-transmitted by the movable platform, wherein the second beacon frame is transmitted by the movable platform when a transmitting period of the second beacon frame arrives, and the second beacon frame includes identification information of the movable platform; and
obtaining the identification information of the movable platform according to the second beacon frame, wherein:
supervising the movable platform includes: supervising the movable platform identified by the identification information; wherein:
the transmitting period of the first beacon frame is different from the transmitting period of the second beacon frame.

17. The method according to claim 16, wherein the identification information of the movable platform is carried in an SSID field in the second beacon frame.

18. A movable platform, comprising:
a first processor, configured to obtain position information of the movable platform, and generate a first beacon frame according to the position information of the movable platform, wherein the first beacon frame includes the position information of the movable platform; and
a first wireless communication device, configured to broadcast-transmit the first beacon frame through a wireless channel, so that a terminal device receiving the first beacon frame supervises the movable platform according to the position information in the first beacon frame.

19. The movable platform according to claim 18, wherein the first processor is specifically configured to: obtain the position information of the movable platform when a transmitting period of the first beacon frame arrives.

20. The movable platform according to claim 18 or 19, wherein the first wireless communication device includes a Wi-Fi module, and the Wi-Fi module is configured to broadcast-transmit the first beacon frame through a Wi-Fi channel; or
the first wireless communication device includes a Bluetooth module, and the Bluetooth module is configured to broadcast-transmit the first beacon frame through a Bluetooth channel.

21. The movable platform according to any one of claims 18-20, wherein the position information of the movable platform is carried in a service set identifier (SSID) field in the first beacon frame.

22. The movable platform according to claim 21, wherein the SSID field in the first beacon frame further includes manufacturer identification information of the movable platform.

23. The movable platform according to any one of claims 18-22, wherein the position information includes at least one of: longitude, latitude, or altitude.

24. The movable platform according to any one of claims 18-23, wherein:
the first wireless communication device is further configured to broadcast-transmit a second beacon frame through the wireless channel when a transmitting period of the second beacon frame arrives, and the second beacon frame includes the identification information of the movable platform;
wherein, the transmitting period of the first beacon frame is different from the transmitting period of the second beacon frame.

25. The movable platform according to claim 24, wherein the identification information of the movable platform is carried in an SSID field in the second beacon frame.

26. The movable platform according to any one of claims 18-25, wherein the movable platform further includes: a positioning device; wherein:
the positioning device is configured to receive positioning signals; and
the first processor is specifically configured to obtain the position information of the movable platform according to the positioning signals received by the positioning device.

27. A terminal device, comprising:
a second wireless communication device, configured to receive a first beacon frame broadcast-transmitted by a movable platform through a wireless channel, wherein the first beacon frame includes position information of the movable platform, and the first beacon frame is transmitted by the movable platform when a transmitting period of the first beacon frame arrives; and
a second processor, configured to obtain the position information of the movable platform according to the first beacon frame; and supervise the movable platform according to the position information of the movable platform.

28. The terminal device according to claim 27, wherein the second wireless communication device is further configured to continue to receive the first beacon frame periodically broadcast-transmitted by the movable platform through the wireless channel; and
the second processor is further configured to supervise the movable platform according to the position information of the movable platform in the first beacon frame received continuously.

29. The terminal device according to claim 27 or 28, wherein the second wireless communication device includes: a Wi-Fi module; and the Wi-Fi module is configured to receive the first beacon frame broadcast-transmitted by the movable platform through a Wi-Fi channel; or
the second wireless communication device includes: a Bluetooth module; and the Bluetooth module is configured to receive the first beacon frame broadcast-transmitted by the movable platform through a Bluetooth channel.

30. The terminal device according to any one of claims 27-29, wherein the position information of the movable platform is carried in a service set identifier (SSID) field in the first beacon frame; and
the second processor is specifically configured to: parse the SSID field in the first beacon frame to obtain the position information of the movable platform.

31. The terminal device according to claim 30, wherein the SSID field in the first beacon frame further includes manufacturer identification information of the movable platform.

32. The terminal device according to any one of claims 27-31, wherein the position information includes at least one of: longitude, latitude, or altitude.

33. The terminal device according to any one of claims 27-32, wherein:
the second wireless communication device is further configured to receive, through the wireless channel, a second beacon frame broadcast-transmitted by the movable platform, the second beacon frame is transmitted by the movable platform when a transmitting period of the second beacon frame arrives, and the second beacon frame includes identification information of the movable platform;
the second processor is further configured to obtain the identification information of the movable platform according to the second beacon frame; and
correspondingly, when the second processor supervises the movable platform, the second processor is specifically configured to: supervise the movable platform identified by the identification information;
wherein, the transmitting period of the first beacon frame is different from the transmitting period of the second beacon frame.

34. The terminal device according to claim 33, wherein the identification information of the movable platform is carried in an SSID field in the second beacon frame.

35. A supervision control system for a movable platform, comprising a movable platform, and a terminal device; wherein:
the movable platform is configured to obtain position information of the movable platform; according to the position information of the movable platform, generate a first beacon frame, wherein the first beacon frame includes the position information of the movable platform; and broadcast-transmit the first beacon frame through a wireless channel; and
the terminal device is configured to receive the first beacon frame broadcast-transmitted by the movable platform through the wireless channel; obtain the position information of the movable platform according to the first beacon frame; and supervise the movable platform according to the position information of the movable platform.

36. The system according to claim 35, wherein, when the movable platform obtains the position information of the movable platform, the position information of the movable platform is specifically obtained, when a transmitting period of the first beacon frame arrives.

37. The system according to claim 35 or 36, wherein the movable platform is specifically configured to: broadcast-transmit the first beacon frame through a Wi-Fi channel; or broadcast-transmit the first beacon frame through a Bluetooth Channel.

38. The system according to any one of claims 35-37, wherein the position information of the movable platform is carried in a service set identifier (SSID) field in the first beacon frame; and
the terminal device is specifically configured to parse the SSID field in the first beacon frame to obtain the position information of the movable platform.

39. The system according to claim 38, wherein the SSID field in the first beacon frame further includes manufacturer identification information of the movable platform.

40. The system according to any one of claims 35-39, wherein the position information includes at least one: longitude, latitude, or altitude.

41. The system according to any one of claims 35-40, wherein the terminal device is further configured to continue to receive the first beacon periodically broadcast-transmitted by the movable platform through the wireless channel; and supervise the movable platform according to the position information of the movable platform in the first beacon frame received continuously.

42. The system according to any one of claims 35-41, wherein:
the movable platform is further configured to broadcast-transmit a second beacon frame through the wireless channel when a transmitting period of the second beacon frame arrives, and the second beacon frame includes identification information of the movable platform, wherein the transmitting period of the first beacon frame is different from the transmitting period of the second beacon frame; and
the terminal device is also configured to receive the second beacon frame broadcast-transmitted by the movable platform through the wireless channel; and accordingly, specifically configured to supervise the movable platform identified by the identification information, when the terminal device supervises the movable platform.

43. The system according to claim 42, wherein the identification information of the movable platform is carried in the SSID field in the second beacon frame.

44. The system according to any one of claims 35-43, wherein:
the movable platform is also configured to receive positioning signals through a positioning device of the movable platform; and
when the movable platform obtains the position information of the movable platform, it is specifically configured to obtain the position information of the movable platform according to the positioning signals.
